# EUROPEAN PATENT APPLICATION

(11) **EP 4 450 189 A1**
(43) Date of publication of application: **23.10.2024**
(21) Application number: 24164296.6
(22) Date of filing: 18.03.2024
(51) Int. Cl.: B22F 10/14, B22F 10/25, B22F 10/28, B22F 12/00, B22F 12/33, B33Y 10/00, B33Y 30/00, B33Y 80/00, B22F 5/10, B23K 26/342, B23P 15/00, F02K 9/97, B22F 10/80, B22F 7/06, B22F 12/80

(54) **ADDITIVE MANUFACTURING USING MULTIPLE METALLIC MATERIALS**

(30) Priority: 17.03.2023 US 202363490981 P
(71) Applicant: Relativity Space, Inc., Long Beach, CA 90807 (US)
(72) Inventor: FULLER, John Charles, Long Beach, 90807 (US); VERSLUYS, Kiley, Long Beach, 90807 (US); MORAKALIS, Konstantine, Long Beach, 90807 (US); GLORIA, Nicholas, Long Beach, 90807 (US); WRIGHT JR., Bishop, Long Beach, 90807 (US)
(74) Representative: EIP

(57) **Abstract**

Powder-based additive manufacturing processes for producing integral parts with multiple metallic materials are disclosed. The integral parts are printed as single pieces by joining different metallic materials together during printing. A combination of different powder-based additive manufacturing processes or the same process can be used to produce the integral part.

## Description

### CROSS-REFERENCE TO RELATED APPLICATIONS

The current application claims the benefit, under 35 U.S.C. § 119(e), of U.S. Provisional Patent Application No. 63/490,981 entitled "Additive Manufacturing Using Multiple Metallic Materials" filed March 17, 2023. The disclosure of U.S. Provisional Patent Application No. 63/490,981 is hereby incorporated by reference in its entirety for all purposes.

### FIELD OF THE INVENTION

This application generally refers to systems and methods for additive manufacturing.

### BACKGROUND

Additive manufacturing is a process by which a product or part is manufactured by adding one layer of material on top of another in a sequence or pattern that would result in a solid part being built. This method of manufacturing is commonly referred to as three dimensional or 3D printing and can be done with different materials, including polymer, ceramic, and metal.

Powder-based 3D printing of metallic structures typically involves using an energy source to melt and fuse metallic powder together. Layers of metal powder can be evenly distributed using a re-coating mechanism onto a build plate. The build plate, fastened to a movable platform, can move in a vertical (Z) axis. Once the powder layer is distributed, a 2D slice of a print part geometry can be fused by selectively melting the powder. The energy source can be a laser or an electron beam. The energy is intense and focused such that it permits full melting (fusion) of the particles to form a solid structure. The process is repeated layer after layer until the part is complete.

### SUMMARY OF THE INVENTION

Systems and methods in accordance with some embodiments of the invention are directed to additive manufacturing using multiple powder based metallic materials.

Some embodiments include a multi material additive manufacturing system, comprising: a first print system configured to print a first section of a part on a build plate using a first powder metallic material; wherein the first print system comprises an energy source configured to melt and fuse the first powder metallic material and form the first section in a layer-by-layer fashion; a second print system; and an alignment system configured to align the build plate with the second print system; wherein the second print system is configured to print a second section of the part using a second powder metallic material; wherein the second print system comprises an energy source configured to melt and fuse a portion of the first section and the second powder metallic material together at an interface between the first and second sections such that the second section is printed on the first section and the part is printed as an integral piece; wherein the first and second powder metallic materials are different.

In some embodiments, the first print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.

In some embodiments, the second print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.

In some embodiments, each of the first and the second powder metallic materials is selected from the group consisting of: a Ni-based alloy, a Ni-based superalloy, an Inconel^{®} alloy, a Haynes^{®} alloy, a Ni-Cr based alloy, a Cu-based alloy, a Cu-Ni-based alloy, a Cu-Cr-Nb alloy, a Cu-Co-Nb-based alloy, a GRCop alloy, a ferrous alloys, an iron-based alloys, an Al-based alloy, a Co-Cr-based alloy, a Ti-based alloy, steel, a precious metal-based alloy, a Au-based alloy, and a Ag-based alloy.

In some embodiments, each of the first and the second powder metallic materials is selected from the group consisting of: Inconel-625^{®}, Inconel-718^{®}, Haynes-230^{®}, GRCop-42, GRCop-84, C-18150, C-18200, tool steel, stainless steel, 316L, 17-4PH, low carbon steel, medium carbon steel, a 3xxx Al alloy, a 4xxx Al alloy, a 5xxx Al alloy, a 6xxx Al alloy, and a 7xxx Al alloy.

In some embodiments, each of the first and the second powder metallic materials has an average diameter from 10 microns to 100 microns.

In some embodiments, the alignment system comprises a plurality of alignment pins and an open loop feedback system to align the build plate with the second print system.

In some embodiments, the interface of the first and the second sections has a gradient of compositions, microstructures, and mechanical properties.

Some embodiments include a method for additive manufacturing a multi material part, comprising: printing a first section of a part on a build plate using a first powder metallic material with a first print system; removing the build plate and the first section from the first print system and aligning the build plate with a second print system; printing a second section of the part with a second powder metallic material such that the second section is printed on the first section and the part is printed as an integral piece; wherein the first and second powder metallic materials are different.

In some embodiments, the first print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.

In some embodiments, the second print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.

In some embodiments, each of the first and the second powder metallic materials is selected from the group consisting of: a Ni-based alloy, a Ni-based superalloy, an Inconel^{®} alloy, a Haynes^{®} alloy, a Ni-Cr based alloy, a Cu-based alloy, a Cu-Ni-based alloy, a Cu-Cr-Nb alloy, a Cu-Co-Nb-based alloy, a GRCop alloy, a ferrous alloy, an iron-based alloy, an Al-based alloy, a Co-Cr-based alloy, a Ti-based alloy, steel, a precious metal-based alloy, a Au-based alloy, and a Ag-based alloy.

In some embodiments, each of the first and the second powder metallic materials is selected from the group consisting of: Inconel-625^{®}, Inconel-718^{®}, Haynes-230^{®}, GRCop-42, GRCop-84, C-18150, C-18200, tool steel, stainless steel, 316L, 17-4PH, low carbon steel, medium carbon steel, a 3xxx Al alloy, a 4xxx Al alloy, a 5xxx Al alloy, a 6xxx Al alloy, and a 7xxx Al alloy.

In some embodiments, each of the first and the second powder metallic materials has an average diameter from 10 microns to 100 microns.

In some embodiments, the aligning step uses a plurality of alignment pins and an open loop feedback system to align the second print system.

Some embodiments further comprise post processing the first section.

In some embodiments, the post processing step is selected from the group consisting of blasting, brushing, rinsing, washing, polishing, machining, dying, heating, annealing, solution annealing, normalizing, stress relieving, aging, tempering, selective heat treating, cold treating, cryogenic treating, carburizing, decarburization, case hardening, precipitation strengthening, hot isostatic pressing, quenching, cooling, and any combinations thereof.

Some embodiments further comprise tuning a plurality of print parameters of the first print system to achieve a surface roughness of the first section.

In some embodiments, the plurality of print parameters is selected from the group consisting of: laser power, laser scan speed, laser beam waist, hatch spacing, material layer thickness, and exposure quantity.

Some embodiments further comprise post processing the second section.

In some embodiments, the post processing step is selected from the group consisting of blasting, brushing, rinsing, washing, polishing, machining, dying, heating, annealing, solution annealing, normalizing, stress relieving, aging, tempering, selective heat treating, cold treating, cryogenic treating, carburizing, decarburization, case hardening, precipitation strengthening, hot isostatic pressing, quenching, cooling, and any combinations thereof.

Some embodiments include a multi material part for a rocket engine, comprising: an oxidizer dome comprising a first metallic material; and an injector plate comprising a second metallic material; wherein the first and the second metallic materials are melted and fused together at an interface between the oxidizer dome and the injector plate such that the oxidizer dome and the injector plate are additive manufactured as an integral piece.

Additional embodiments and features are set forth in part in the description that follows, and in part will become apparent to those skilled in the art upon examination of the specification or may be learned by the practice of the disclosure. A further understanding of the nature and advantages of the present disclosure may be realized by reference to the remaining portions of the specification and the drawings, which forms a part of this disclosure.

### BRIEF DESCRIPTION OF THE DRAWINGS

The description will be more fully understood with reference to the following figures, which are presented as embodiments of the invention and should not be construed as a complete recitation of the scope of the invention, wherein:
Figure 1 illustrates a schematic of a thrust chamber in accordance with prior art.
Figure 2 illustrates a schematic of F-1 rocket engine in accordance with prior art.
Figure 3 illustrates a process of printing an integral part with multiple metallic materials in accordance with an embodiment.
Figure 4 illustrates various geometries of bimetallic part in accordance with an embodiment.
Figure 5 illustrates an assembled oxidizer dome and injector plate of a rocket engine.
Figure 6 illustrates printed cylinders with two different metallic materials in accordance with an embodiment.
Figure 7 illustrates a dimensional evaluation of the printed cylinders in accordance with an embodiment.
Figure 8 illustrates optical images of the columns printed with single laser exposure and powder layer thickness of 15 µm in accordance with an embodiment.
Figure 9 illustrates optical images of the columns printed with single laser exposure and powder layer thickness of 30 µm in accordance with an embodiment.
Figure 10 illustrates optical images of the columns printed with double laser exposure and powder layer thickness of 15 µm in accordance with an embodiment.
Figure 11 illustrates optical images of the columns printed with double laser exposure and powder layer thickness of 30 µm in accordance with an embodiment.
Figures 12A through 12C illustrate microhardness of printed cylinders in accordance with an embodiment.
Figures 13A through 13E illustrate joint qualities of a printed bimetallic part in accordance with an embodiment.
Figure 14 illustrates an additive manufactured engine part for a launch vehicle in accordance with an embodiment.

### DETAILED DESCRIPTION OF THE INVENTION

Rocket engines use stored rocket propellants as the reaction mass for forming a high-speed propulsive jet of fluid, usually high-temperature gas. Rocket engines are reaction engines, producing thrust by ejecting mass rearward, in accordance with Newton's third law. In most rocket engines, propellants (such as fuel and oxidizers) are supplied in liquid form through an injector. The injector atomizes and sprays the propellants into the combustion chamber. The combustion of reactive propellants supplies the necessary energy to produce thrust.

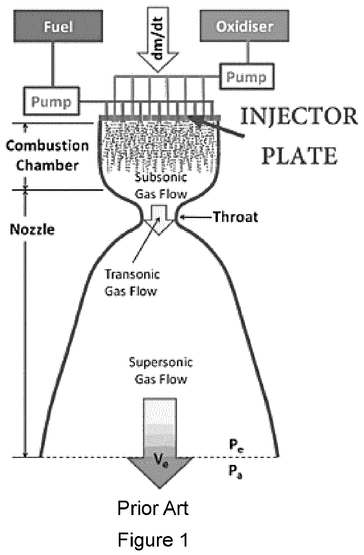

As shown schematically in FIG. 1, rocket engines generally comprise a main thrust chamber assembly fed through a series of inlets and injectors with a mixture of fuel and oxidizer through a series of high-pressure fluid handling manifolds. Fuel (such as liquid hydrogen, liquid natural gas, or kerosene) can be pumped into the combustion chamber. Oxidizer (such as liquid oxygen, LOX) can be pumped from an oxidizer dome into the combustion chamber through the injector (or the injector plate). A subsonic flow of gas is created by the combustion of the fuel and oxidizer in the combustion chamber that is accelerated to transonic speeds at a narrowing of the chamber called a throat, which ultimately produces an expanding supersonic gas flow in the nozzle skirt which is the terminus of the engine.

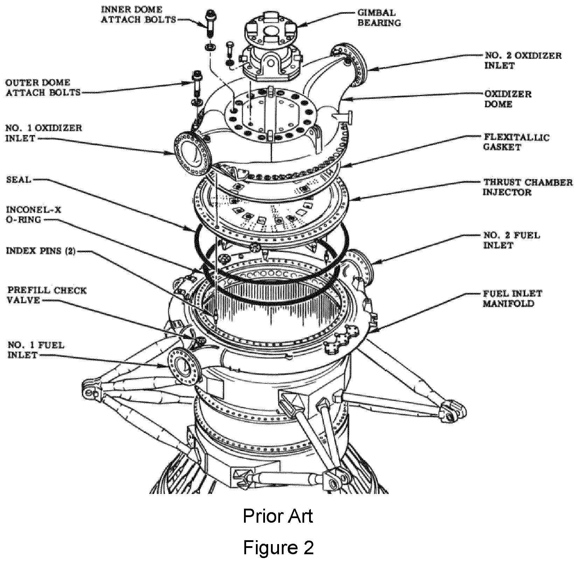

Traditionally, various parts of the rocket engine such as the oxidizer dome, the injector plate, the inside liner of the combustion chamber, are separately manufactured and then assembled together through welding, brazing, or other fasteners. The injector in a liquid rocket engine atomizes and mixes the fuel with the oxidizer to produce efficient and stable combustion that will provide the required thrust without endangering hardware durability. Injectors can have a form of a perforated disk at the head of the rocket engine combustion chamber and have varied diameters. Fig. 2 illustrates a schematic of F-1 rocket engine. The injector is located near the forward end of the engine. Just forward of the injector is the LOX dome (also known as the oxidizer dome), through which the liquid oxygen is directed to the injector. The LOX dome is bolted to the injector by 16 inner-dome support bolts, and both the oxidizer dome and the injector are bolted to the thrust chamber body by 64 outer-dome attach bolts. To prevent liquid fuel leakage, a plurality of gaskets, seals (such as C-seals), O-rings, and pins are used to fasten and secure the different components together.

While this conventional manufacturing process allows for each component of the rocket engine to be of a relatively simple and conventional design, the number and assembly of components creates a highly complex process. Moreover, liquid fuel leak is prone to happen where different metal parts are joined together. Reducing the total number of parts manufactured and assembled can save time and cost of engine manufacturing and reduce the risk of leakage.

Additive manufacturing is the process of creating an object by building one layer at a time. This process can be contrasted with conventional molding or casting techniques, in which components of an object are created in a single step via a premade mold of the object and then assembled together. When manufacturing complex devices, additive manufacturing has the distinct benefit of being able to produce almost any geometry, thereby permitting the integration of many components into a single piece. By contrast, conventional manufacturing typically requires the formation of numerous components which then must be assembled together to form a whole. Additive manufacturing eliminates that barrier. This also means that manufacturers can eliminate weight from an object. This is particularly important in the aerospace and automobile industries, where weight can affect the functionality of a final product.

However, wire-based additive manufacturing and most powder-based additive manufacturing processes are limited to single material due to machine specific restrictions. If an end part requires two parts of different materials to be joint together, the two parts are normally printed individually and then joint together using an additional printing process, or welding, or using other fastening means (such as clamps, screws, bolts).

### Powder-Based Additive Manufacturing using Multiple Metallic Materials

Various additive manufacturing processes that print an integral part with multiple metallic materials are disclosed. The part is printed as a single piece using powder-based additive manufacturing processes. The part can include a number of sections where each section is printed with a material that is suitable for the section's functions. Each section of the part can be printed with different metallic materials depending on the applications. Even though the part is printed with multiple metallic materials, the part is printed as an integral piece without a further process to join or connect the different sections together.

For the purpose of the disclosure, additive manufacturing (AM), printing, 3D printing, and/or powder-based printing, refer to any powder-based AM process that uses metallic powder materials, unless otherwise specified. Examples of applicable powder-based AM processes include (but are not limited to): powder bed fusion (PBF), laser powder bed fusion (L-PBF), laser powder bed (LPB), direct metal laser melting (DMLM), direct metal laser sintering (DMLS), selective laser sintering (SLS), selective heat sintering (SHS), laser metal fusion (LMF), laser metal deposition (LMD), selective laser melting (SLM), laser powder directed energy deposition (LP-DED), cold spray additive manufacturing (CSAM), electron beam melting (EBM), direct metal deposition (DMD), binder jetting (BJ), and multi jet fusion (MJF). In some embodiments, the same powder-based AM process can be used for printing a part with multiple metallic materials. In several embodiments, a combination of different powder-based AM processes can be used for printing a part with multiple metallic materials.

The printing process in accordance with many embodiments prints a part with at least two different metallic materials; or with at least three different metallic materials; or with at least four different metallic materials; or with at least five different metallic materials. The different metallic materials can be joined together during printing. The print part is printed as a single piece without processes such as welding (such as manual welding), riveting, brazing, screwing, fastening, or applying adhesives, to join the different parts (and materials) together.

Various metallic materials are compatible with the powder-based printing processes with multiple materials. Examples of metallic materials include (but are not limited to) nickel (Ni)-based alloys, Ni-based superalloys, Ni-chromium (Cr) based alloys, copper (Cu)-based alloys, Cu-Ni-based alloys, Cu-Cr-niobium (Nb) alloys, Cu-cobalt (Co)-Nb-based alloys, ferrous alloys, iron-based alloys, aluminum (Al)-based alloys, Co-Cr-based alloys, titanium (Ti)-based alloys, steel, and precious metal-based alloys. Ni-based alloys can have high strength. Examples of Ni-based alloys include (but are not limited to) Inconel^{®} alloys (such as Inconel-625^{®} and/or Inconel-718^{®}), and/or Haynes^{®} alloys (such as Haynes-230^{®}). Cu-Co-Nb-based alloys can have high thermal conductivity. Examples of Cu-Co-Nb-based alloys include (but are not limited to) GRCop class alloys, GRCop-42, GRCop-84, C-18150, and C-18200. Examples of steel include (but are not limited to) tool steel, stainless steel, 316L, 17-4PH, low and/or medium carbon steel. Examples of Al-based alloys include (but are not limited to) 3xxx series, 4xxx series, 5xxx series, 6xxx series, and 7xxx series. Examples of precious metal-based alloys include (but are not limited to) gold (Au)-based alloys, and silver (Ag)-based alloys.

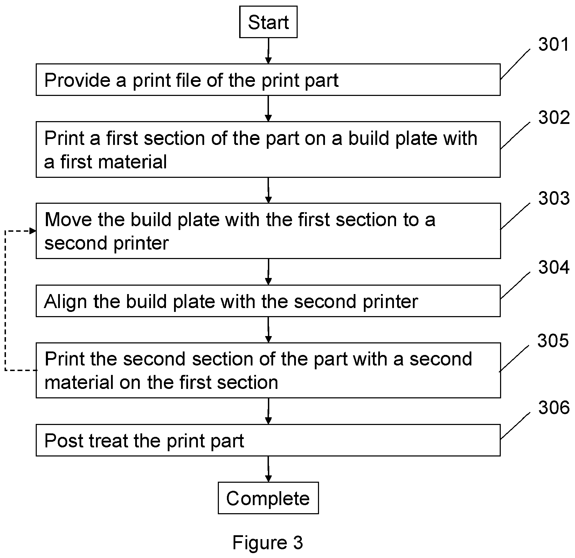

Figure 3 illustrates a process of printing an integral part with multiple metallic materials in accordance with an embodiment of the invention. The process starts with generating a print file of the part using a computer 301. The print file includes a 3D model of the print part. The print part can include various sections. The sections can be determined by the materials they will be printed with. Different sections can be printed with different materials. The 3D model can then be sliced into layers, creating a 2D cross-section of each layer. Various software such as computer aided design (CAD) software can be used for generating the print file. The file can be loaded into the printers.

The print process begins with a first section of the part being printed on a build plate with a first material 302. Before printing starts, the build plate is aligned with the printer. A bed of powder of the first material is heated to a consistent temperature. The printer starts drawing the first layer of the first section by melting and fusing the metal powder particles together. The first layer of the first section is formed on the build plate. The second layer is deposited on top of the first layer, and the first section of the part is printed in a layer-by-layer fashion. Any of a variety of a powder-based additive manufacturing process can be used for printing the first section. Any of a suitable metallic material can be used for printing the first section. In various embodiments, the printing is carried out in an inert environment where the print part is surrounded by an inert gas including (but not limited to) nitrogen, argon, helium, carbon dioxide, xenon, krypton, radon, and any combinations thereof.

When the print of the first section is complete, the first section together with the build plate can be removed from the first printer 303. A post process of the first section may be carried out but may not be necessary. Optional post processes (such as brushing, rinsing and/or washing with a volatile solution) can remove residual powders on the surface. Optional post processes (such as machining and/or polishing) may be used to improve the surface finish of the first section. Optional post processes (such as heating, annealing, aging, and/or hot isostatic press) can also enhance the microstructures (such as porosity) and mechanical properties (such as yield strength, elongation, hardness) of the first section.

In some embodiments, the surface roughness of the first section can affect the print of the second section as the second section is printed on top of the first section. If the surface finish of the first section is too smooth, it may be difficult to deposit additional layers on top. If the surface finish is too rough, it can affect the print quality of the additional layers. A variety of parameters can affect the surface roughness, such as metallic powder diameter, thickness of the powder layer, the width and/or the waist width of a laser beam, laser power, scan speed, hatch spacing (distance between two consecutive laser beams), and exposure quantity (the number of times the powder is exposed under the laser). Optimal parameters can be analyzed and selected to achieve the desired surface roughness. As the powder particles are fused together to form a layer, the surface roughness can correlate to the powder diameter. The surface roughness can be on the same order of magnitude as the powder diameter. For example, the surface roughness can be a few microns; or tens of microns; or hundreds of microns. The powder diameters can be selected to achieve the desired surface roughness of the first section of the print part. The powder diameters can also affect the quality of the joint where two materials are fused together. The powder can have a size distribution with powder diameters ranging from about 10 microns to about 100 microns; or from about 10 microns to about 50 microns; or from 15 microns to about 45 microns; or from about 20 microns to about 40 microns; or from about 15 microns to about 35 microns; or from about 20 microns to about 30 microns; or from about 10 microns to about 15 microns; or from about 15 microns to about 20 microns; or from about 20 microns to about 25 microns; or from about 25 microns to about 30 microns; or from about 30 microns to about 35 microns; or from about 35 microns to about 40 microns; or from about 40 microns to about 45 microns; or from about 45 microns to about 50 microns; or from about 50 microns to about 55 microns; or from about 55 microns to about 60 microns; or from about 60 microns to about 65 microns; or from about 65 microns to about 70 microns; or from about 70 microns to about 75 microns; or from about 75 microns to about 80 microns; or from about 80 microns to about 85 microns; or from about 85 microns to about 90 microns; or from about 90 microns to about 95 microns; or from about 95 microns to about 100 microns.

Another factor that may affect the surface roughness can be the waist width of the laser beam (also known as the beam waist, or beam focus). The waist width of the laser beam is the location along the propagation direction where the beam radius has a minimum. As the laser beam melts the powder particles to form a layer, the surface roughness of the layer can be a percentage ranging from about 10% to about 90 % of the beam waist. The surface roughness can be from about 10% to about 20% of the beam waist; or from about 20% to about 30% of the beam waist; or from about 30% to about 40% of the beam waist; or from about 40% to about 50% of the beam waist; or from about 50% to about 60% of the beam waist; or from about 60% to about 70% of the beam waist; or from about 70% to about 80% of the beam waist; or from about 80% to about 90% of the beam waist. The beam waist can range from about 70 microns to about 100 microns; or from about 70 microns to about 80 microns; or from about 80 microns to about 90 microns; or from about 90 microns to about 100 microns. Specific laser parameters can be selected to achieve the desired surface roughness for the first section.

The build plate together with the first section can then be aligned with a second printer to print the second section of the part with a second material 304. Any of a variety of a powder-based additive manufacturing process can be used for printing the second section. Any of a suitable metallic material can be used for printing the second section. The printing can be carried out in an inert environment where the print part is surrounded by an inert gas including (but not limited to) nitrogen, argon, helium, carbon dioxide, xenon, krypton, radon, and any combinations thereof. Accurate alignment of the build plate can be important to ensure print quality and part accuracy. Various alignment methods can be used to align the build plate with the printer. The build plate has aligning pins underneath to locate the laser. The aligning pins can be modified in accordance with several embodiments to enhance the alignment accuracy. Some embodiments increase the number of aligning pins to better detect the misalignment between the build plate and the laser. In certain embodiments, the aligning pins can be of different shapes to show the misalignment in both X direction and Y direction. The pins can have a shape (or the shape of a cross-section) including (but not limited to) a circle, a cross, an ellipse, a triangle, a square, a rectangle, a star, an L shape, a T shape, and any combinations thereof. The build plate can have holes around the corners to stabilize the plate from moving. Many embodiments use multiple corner holes in a row and/or in an array to constrain the movement of the build plate to achieve better alignment. Several embodiments use smaller corner holes (such as smaller diameter) to secure the build plate. Several embodiments implement open loop feedback systems to improve alignment accuracy. A visual monitoring system (such as cameras, video cameras) can be used to locate a target structure using a reference structure with known location information. The location information of the target structure relative to the reference structure can be obtained and processed by the monitoring system. Feedback based on the location information can be sent to the printer. The position of the printer can be adjusted manually and/or automatically based on the feedback to locate the target structure.

When the alignment is complete, a second section of the part can be printed on the first part with a second material 305. The second material is different from the first material. The second section can be printed in a layer-by-layer fashion until the second section is complete.

A first layer of the second section can be formed on the last layer of the first section. As the energy source melts the second material, the last few layers of the first section are melted as well. During the melting and fusing process, the second material and the first material can be joined together. A region, also referred as a diffusion region, can be formed where the second metallic material and the first metallic material are fused together. The diffusion region acts as a transition zone and can have a composition with a gradient of the first material and the second material. The diffusion region has transitional properties between the first and the second materials as a result of the material composition gradient. The gradient properties of the diffusion zone (such as microstructures, phases, and/or mechanical properties) can be tailored for specific applications.

The diffusion region can have various geometries (such as the thickness in the Z direction) and properties (such as microstructures, mechanical properties) depending on a variety of parameters including (but not limited to) print materials, print parameters, and print geometries. The thickness of the diffusion region can be controlled by total input power, the width of the laser beam, scan speed, hatch spacing, exposure quantity, metallic powder diameter, and/or thickness of the powder layer. A higher input power may result in a thicker diffusion region. A laser source can have a laser power from about 200 W to about 1000 W; or from about 200 W to about 300 W; or from about 300 W to about 400 W; or from about 400 W to about 500 W; or from about 500 W to about 600 W; or from about 600 W to about 700 W; or from about 700 W to about 800 W; or from about 800 W to about 900 W; or from about 900 W to about 1000 W. The laser can have a scan speed from about 0.1 m/s to about 1 m/s; or from about 0.1 m/s to about 0.2 m/s; or from about 0.2 m/s to about 0.3 m/s; or from about 0.3 m/s to about 0.4 m/s; or from about 0.4 m/s to about 0.5 m/s; or from about 0.5 m/s to about 0.6 m/s; or from about 0.6 m/s to about 0.7 m/s; or from about 0.7 m/s to about 0.8 m/s; or from about 0.8 m/s to about 0.9 m/s; or from about 0.9 m/s to about 1.0 m/s. Controlling the print parameters such as input power and/or scan speed can control the diffusion region thickness to be within an optimal range.

The thickness of the powder layer can affect the diffusion region thickness and/or properties, and the joint qualities. Examples of the powder layer thickness can be from about 15 microns to about 100 microns. The powder layer can have a thickness from about 15 microns to about 20 microns; or from about 20 microns to about 25 microns; or from about 25 microns to about 30 microns; or from about 30 microns to about 35 microns; or from about 35 microns to about 40 microns; or from about 40 microns to about 45 microns; or from about 45 microns to about 50 microns; or from about 50 microns to about 55 microns; or from about 55 microns to about 60 microns; or from about 60 microns to about 65 microns; or from about 65 microns to about 70 microns; or from about 70 microns to about 75 microns; or from about 75 microns to about 80 microns; or from about 80 microns to about 85 microns; or from about 85 microns to about 90 microns; or from about 90 microns to about 95 microns; or from about 95 microns to about 100 microns.

The exposure quantity can affect the diffusion region thickness and/or properties, and the joint qualities. In some embodiments, the energy source such as a laser can be exposed to a single layer of powder for a variety of times to complete the deposition. The laser can be exposed to the powder layer for one time; or two times; or three times; or four times; or five times; or more than five times.

The diffusion region has a mixture composition of two different materials. As the deposition continues layer by layer, the diffusion region can be multiple layers of powder bed materials being fused together. The diffusion region can have a thickness ranging from about 10 microns to about 5 millimeters. The diffusion region thickness can be from about 10 microns to about 50 microns; or from about 50 microns to about 100 microns; or from about 100 microns to about 150 microns; or from about 150 microns to about 200 microns; or from about 200 microns to about 250 microns; or from about 250 microns to about 300 microns; or from about 300 microns to about 350 microns; or from about 350 microns to about 400 microns; or from about 400 microns to about 450 microns; or from about 450 microns to about 500 microns; or from about 500 microns to about 1 millimeter; or from about 1 millimeter to about 2 millimeters; or from about 2 millimeters to about 3 millimeters; or from about 3 millimeters to about 4 millimeters; or from about 4 millimeters to about 5 millimeters.

As discussed above, surface roughness of the first section can affect the deposition of the second material. Surface roughness can also affect the diffusion zone thickness and/or the number of defects in the diffusion zone. A rougher surface (such as a wavy surface) may result in a higher number of defects in the diffusion zone.

The printing process with multiple metallic materials can print a part with a number of sections. A third section can be printed on the second section using similar processes described in 303, 304, and 305. The printing processes can be repeated a number of times until the part is complete.

Post treatment of the print part can be carried out after printing 306. After printing is complete, any excess powder can be removed from the part using various methods including (but not limited to) via a bead blast, brushing, rinsing and/or washing with a volatile solution. The build plate together with the printed part can be removed from the printer for post treatment. Post treatment including (but not limited to) heat treatment and post processes can be applied to achieve desired mechanical properties and surface finish. Post treatment methods can be selected specifically for the materials and/or the combination of the materials. Examples of heat treatment include (but are not limited to) annealing, solution annealing, normalizing, stress relieving, aging, tempering, selective heat treating, cold and/or cryogenic treating, carburizing, decarburization, case hardening, precipitation strengthening, hot isostatic press (HIP), quenching, cooling, and any combinations thereof. Examples of post process include (but are not limited to) machining, polishing, dying, and any combinations thereof.

The printed integral part can have various dimensions ranging from tens of millimeter to tens of centimeter. The dimensions of the printed parts may be limited by the size of the build plate and/or the size of the printer. The build plate may affect the dimensions of the printed part in the X and Y direction. The height of the printer may affect the dimension in the Z direction. The X, Y, and Z dimensions of a printed part can vary from about 400 mm to about 800 mm; or from about 400 mm to about 500 mm; or from about 500 mm to about 600 mm; or from about 600 mm to about 700 mm; or from about 700 mm to about 800 mm. The X, Y, and Z dimensions of a printed part can be less than about 400 mm; or less than about 300 mm; or less than about 200 mm; or less than about 100 mm; or less than about 50 microns. The X, Y, and Z dimensions of a printed part can be greater than about 800 mm.

The powder-based printing process with multiple metallic materials in accordance with many embodiments can print parts with various geometries. The different materials can be joined together via more than one interface. In some embodiments, the second material can be deposited on top of the first material. In several embodiments, the second material can sandwich the first material in the middle. In certain embodiments, the second material can cover the first material by at least three sides; or by at least four sides; or at least five sides; or at least six sides. In a number of embodiments, the first material can be embedded in the second material, where all sides of the first material are in contact with the second material. Print capabilities enable various geometries that can be useful for applications relating to thermal management including (but not limited to) heat exchangers, thermal actuators, casting molds, and/or injection molds.

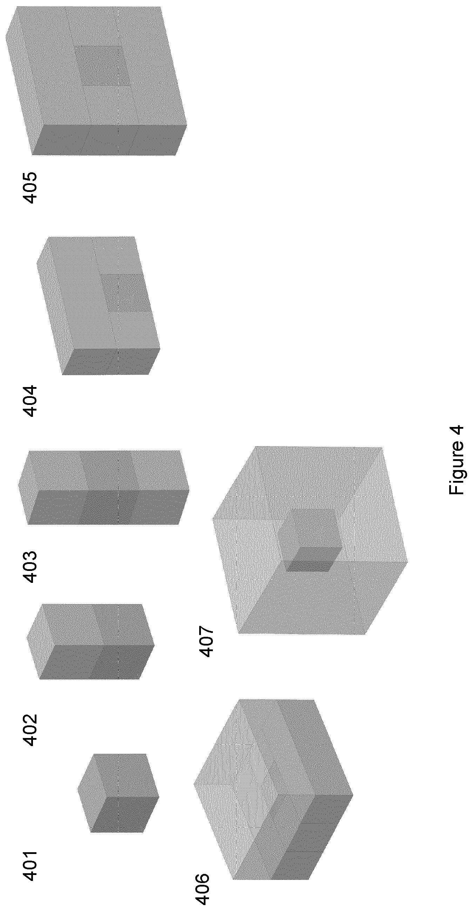

Figure 4 illustrates various printable bimetallic geometries in accordance with an embodiment of the invention. The printing process for a bimetallic part can start with printing a first section 401 with a first metallic material. Although the first section 401 is shown in a cubic shape, it can be in any of a variety of shapes appropriate for printing. Once the first section is complete, a second section can be printed on top of the first section 402. The printing process can continue with alternating materials until the part is complete. 403 shows a part with alternating layers of different materials.

In several embodiments, the second section of the part can be deposited not only on top of the first section, but also adjacent to other sides of the first section. 404 shows a part with the second section enclosing the first section, where the second material is printed on the left side, on the right side, and on top of the first material. The part 404 has the second material enclosing the first material on three sides. Alternatively, 405 shows a part with the second material circling around the first material and covering four sides of the first section. 406 shows a part with a first material embedded in a second material. The first material can be first printed on a build plate. The second material can be deposited around the first material such that the second material covers all exposing sides of the first material. 407 shows a part with a first material nested inside the second material where the second material is in contact with all sides of the first material.

While various processes for powder-based additive manufacturing with multiple metallic materials are described above with reference to Figure 3 and Figure 4, any variety of processes that utilize multiple metallic powder materials to additive manufacture an integral piece can be utilized as appropriate to the requirements of specific applications in accordance with various embodiments of the invention. For the purposes of illustrating a specific example, additive manufacturing rocket engine using multiple metallic powder materials in accordance with various embodiments of the invention are discussed further below.

### Additive Manufacturing of Rocket Engine Parts using Multiple Metallic Materials

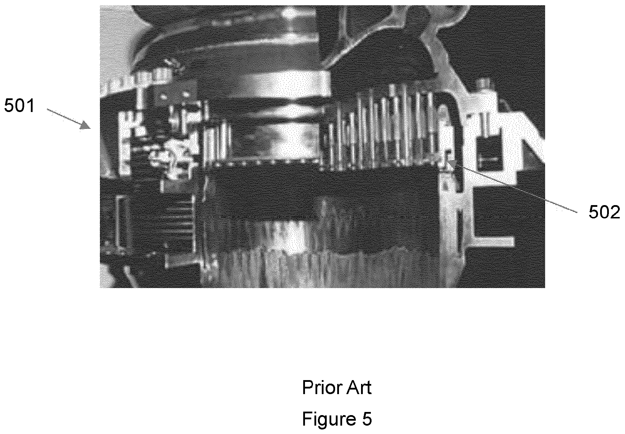

Different parts of a rocket engine are made with different functional materials. For example, the oxidizer dome may be manufactured using a high strength material such as Ni-based alloys. The main injector and/or the liner of the combustion chamber may be manufactured using a high thermally conductive material, such as Cu-Cr-Nb-based alloys. Although these parts can be produced using AM processes, they are printed in separated pieces and then joined together using bolts, washers, helicoils, clamp rings, and sealing components. Figure 5 illustrates a part of a rocket engine with assembled oxidizer dome and the injector. The oxidizer dome 501 can be printed using Inconel^{®} alloy as a single piece. The main injector 502 incorporates various consolidated parts (e.g., injection elements, faceplate, LOX downcomer body, face seal carrier), and can be printed using a Cu-Cr-Nb-based alloy as a single piece. The oxidizer dome and the main injector are produced independently and can then be joined through other processes such as fastening, electron beam welding, or brazing.

The printing process with multiple metallic powder materials in accordance with many embodiments can print various parts of a rocket as a single piece. These parts are traditionally produced as separate pieces and then joined together using bolts, screws, clamps, and additional components to prevent leaking. The integral parts printed by the powder-based printing processes have fewer number of components compared to their separately manufactured counterparts. Thus, the integral parts and/or the rocket have reduced total weight, reduced complexity during manufacturing, and reduced manufacturing time. In several embodiments, the print part preferably has a flat and/or leveled interface where two different materials meet. The printing process in accordance with many embodiments can be utilized in areas of the rocket engine for binding high-thermal conductivity substrate to high-strength/low-conductivity jacket. In certain embodiments, the oxidizer dome, the injector plate (or the main injector), and the combustion chamber liner can be printed as a single piece with multiple metallic materials. Some embodiments print the oxidizer dome and the injector plate (or the main injector) of a rocket engine as a single piece with multiple metallic materials.

Printing the oxidizer dome and the injector plate as a single piece can reduce assembly mass and complexity by eliminating fasteners and joint support materials and by removing flange materials. In an example, the printed integral piece may eliminate more than 100 parts per engine (for example by eliminating about 36 bolts, about 36 washers, about 36 helicoils, about 1 clamp ring, about 2 seals), and reduce from about 30% to about 50% in total weight. The integral piece also reduces potential for leak paths to form a joint between the oxidizer dome and the main injector. Traditionally, the seal between the oxidizer dome and the injector relies on c-seals or other compression seals, which are costly and have a high failure rate.

A computer-generated model of an integral part of the oxidizer dome and the injector plate can be generated prior to printing. The model may include a build plate for the integral part, a 3D structure of the various elements of the oxidizer dome, and a 3D structure of the various elements of the main injector. The various elements of the oxidizer dome and the injector are aligned such that the two different materials are connected to form an integral part. Printing the integral part of the oxidizer dome and the injector plate may start from a build plate as a substrate. The build plate is aligned with a powder-based printer. An oxidizer dome can be printed on the build plate using a Ni-based alloy including (but not limited to) Inconel^{®} 718. When the oxidizer dome is complete, the build plate together with the oxidizer dome can be removed from the first printer and aligned with a second powder-based printer. Once the alignment is complete, a second metallic powder material can be deposited on top of the oxidizer dome. An even layer of the second metallic material is spread on top of the oxidizer dome and the printing process of the injector plate starts. The first layers of the injector plate can be formed on the oxidizer dome such that the two materials are fused together to form an integral piece. The main injector plate can be printed with a Cu-Cr-Nb-based alloy including (but not limited to) such as GRCop-42. The interface between the oxidizer dome and the injector plate is joint together during printing by fusing the two different materials together. A diffusion region is formed at the interface. Properties of the diffusion region will be discussed further below in detail. Various parts of the oxidizer dome and the injector plate are aligned during printing. For example, the oxidizer manifold of the oxidizer dome may be aligned with the oxidizer posts of the injector plate for injecting LOX into the combustion chamber. The alignment is important for print accuracy and print quality. Various methods for analyzing and improving alignment are discussed further below in detail.

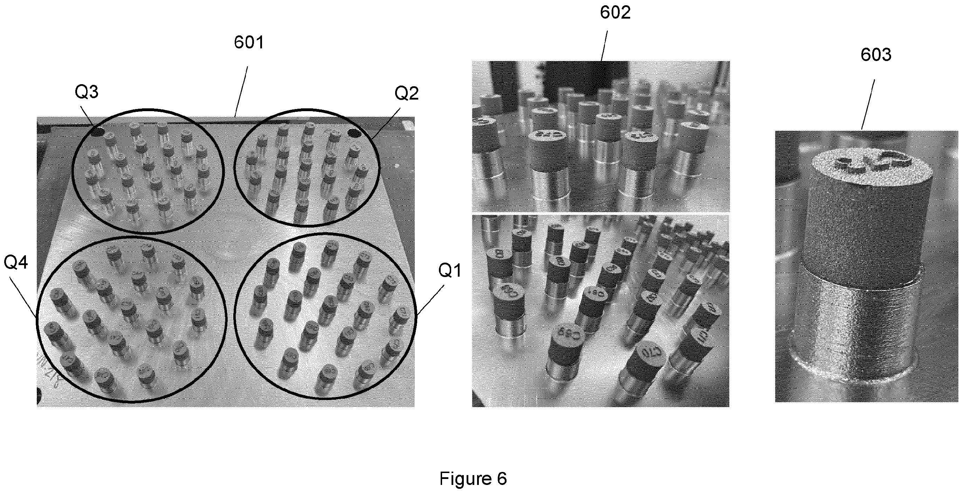

The joint qualities between different materials such as the diffusion layer thickness, the diffusion layer integrity, the mechanical properties, and the alignment, are important for print quality and ensure the functionality of the integral part. Various embodiments print cylinders with different print parameters to develop parameters accounting for cross sectional area, powder layer thickness, laser power, laser speed, and other factors to optimize joint quality. Figure 6 illustrates printed cylinders with two different metallic materials in accordance with an embodiment. The cylinders are printed using the printing process with multiple metallic materials in accordance with many embodiments. The cylinders are printed with a Ni-based alloy and a Cu-Cr-Nb-based alloy. The build plate can be divided into four quadrants: Q1, Q2, Q3, and Q4, as shown in 601. 602 shows a view of the printed cylinders in a quadrant. 603 shows a view of a single printed cylinder with two metallic materials.

Cylinders in each of the four quadrants are printed with the same parameters. Each quadrant uses different print parameters. The print parameters for the four quadrants vary in powder layer thickness and laser exposure quantity. Powder layer thickness refers to the thickness of a single layer of the powder material. Laser exposure quantity refers to the number of times the laser beam is engaged to melt the powder layer. As can readily be appreciated, any of a variety of print parameters including (but not limited to) laser power, scan speed, laser beam width, hatch spacing, powder diameter, powder layer thickness, exposure quantity, can be utilized as appropriate to the requirements of specific applications in accordance with various embodiments of the invention. In an example, Table 1 lists print parameters used for printing the columns in four quadrants.

**Table 1 lists the print parameters for the four quadrants.**

| Parameter set | Q1 | Q2 | Q3 | Q4 |
|---|---|---|---|---|
| Powder layer thickness (µm) | 15 | 30 | 15 | 30 |
| Exposure quantity | Single | Single | Double | Double |

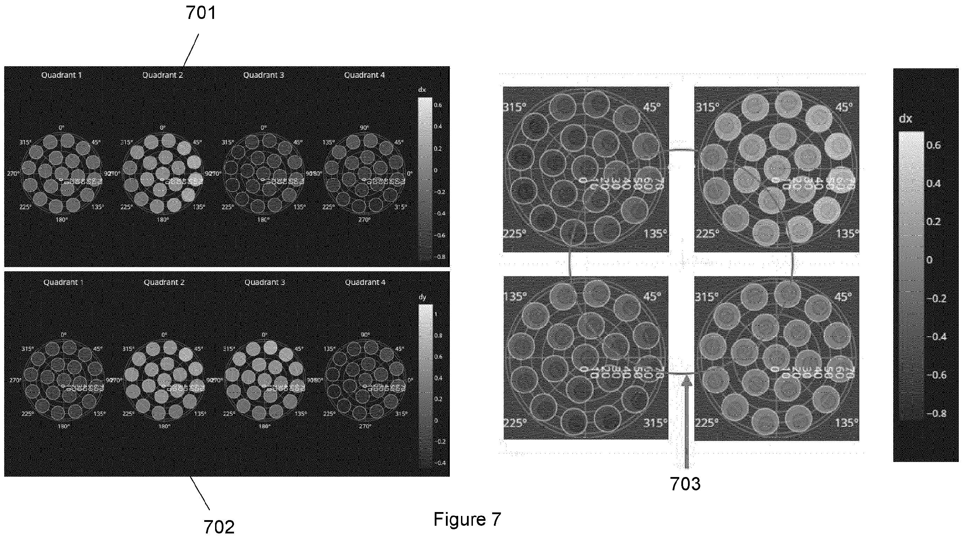

Laser alignment calibration can be performed to investigate the alignment between two materials in each of the four quadrants. Figure 7 illustrates a dimensional evaluation of the printed cylinders in accordance with an embodiment. The cylinders in four quadrants are printed using the parameters listed in Table 1. Misalignment between the two materials in X direction and in Y direction are shown in 701 and 702 respectively. The color scale shows the magnitude of the misalignment in millimeters. As can be seen in 701, the misalignment in X direction varies from quadrant to quadrant. For example, cylinders in Q1 show consistent alignment, while Q2 shows higher variances across the cylinders. The coaxial misalignment in X direction has a variation magnitude of about ±100 µm within about 200 mm diameter from the center of the build plate, and increases significantly near the build plate edges, as shown in 703.

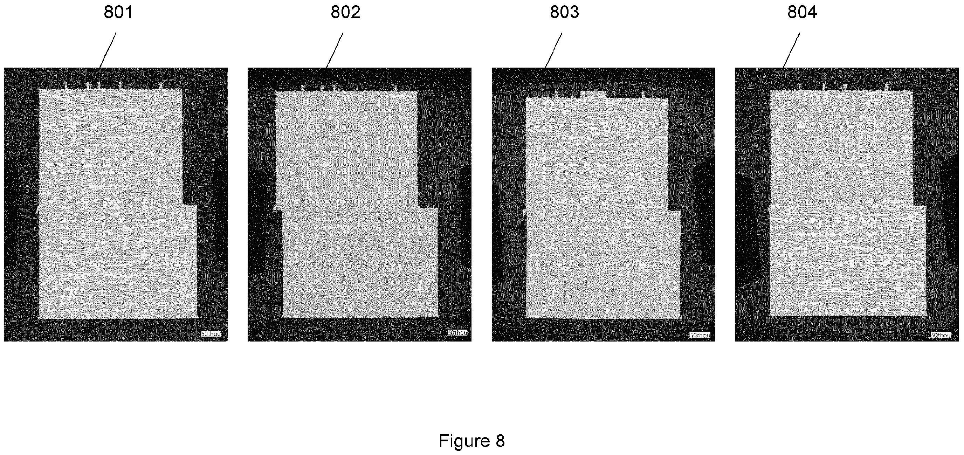

Optical microscopic images of the cylinders investigate joint quality of the cross-sections. Double exposure can reduce porosity at the joint of the bimetallic interface. Figure 8 illustrates optical images of the columns printed with single laser exposure and powder layer thickness of 15 µm in accordance with an embodiment. 801 shows a column from Q1, 802 shows a column from Q2, 803 shows a column from Q3, and 804 shows a column from Q4. No visible cracks can be observed among all four columns. 802 and 803 exhibit some porosity in the joint.

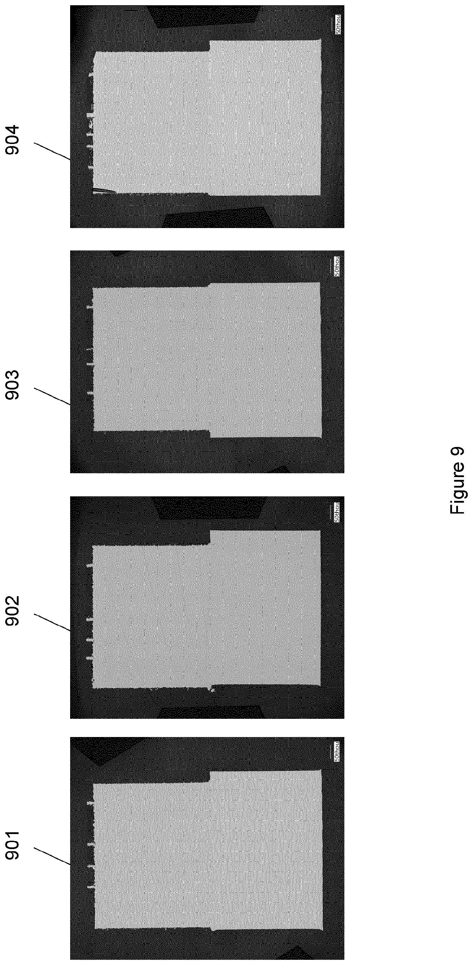

Figure 9 illustrates optical images of the columns printed with single laser exposure and powder layer thickness of 30 µm in accordance with an embodiment. 901 shows a column from Q1, 902 shows a column from Q2, 903 shows a column from Q3, and 904 shows a column from Q4. No significant porosity can be observed among all four columns. 1002 exhibits microcrack at the edge.

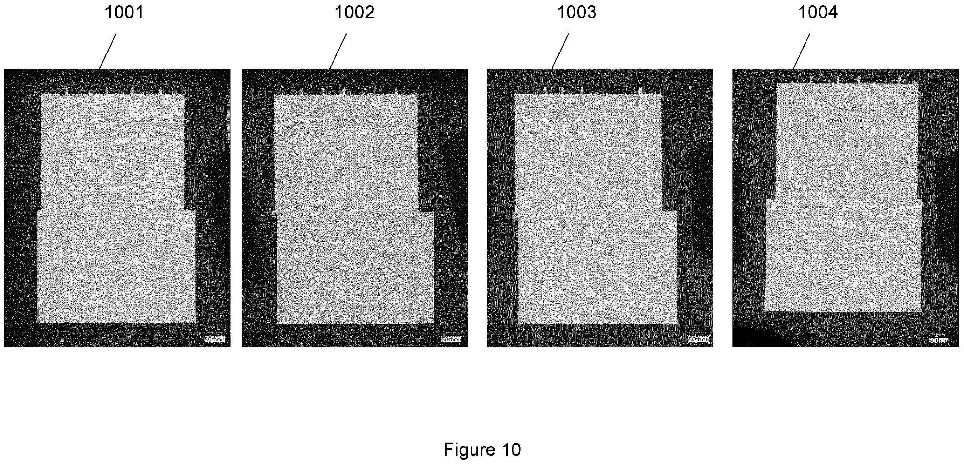

Figure 10 illustrates optical images of the columns printed with double laser exposure and powder layer thickness of 15 µm in accordance with an embodiment. 1001 shows a column from Q1, 1002 shows a column from Q2, 1003 shows a column from Q3, and 1004 shows a column from Q4. Low porosity can be observed at the joint among all four columns.

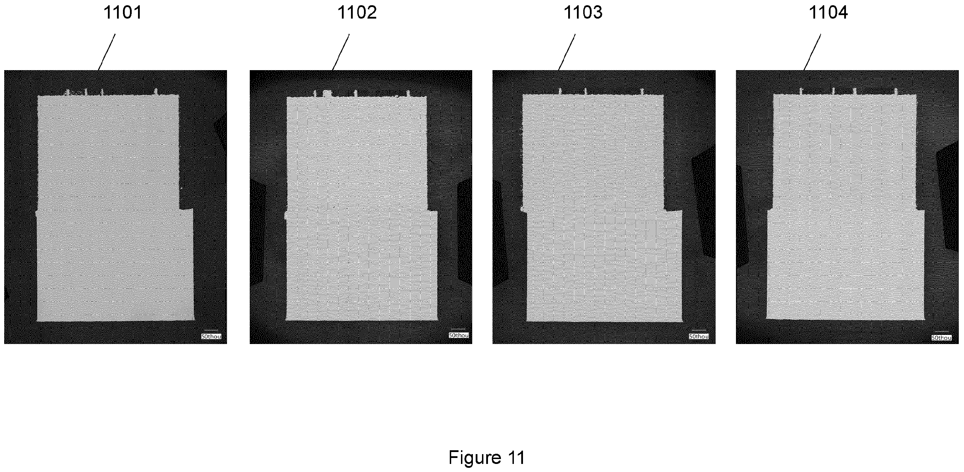

Figure 11 illustrates optical images of the columns printed with double laser exposure and powder layer thickness of 30 µm in accordance with an embodiment. 1101 shows a column from Q1, 1102 shows a column from Q2, 1103 shows a column from Q3, and 1104 shows a column from Q4. Low porosity can be observed at the joint among all four columns.

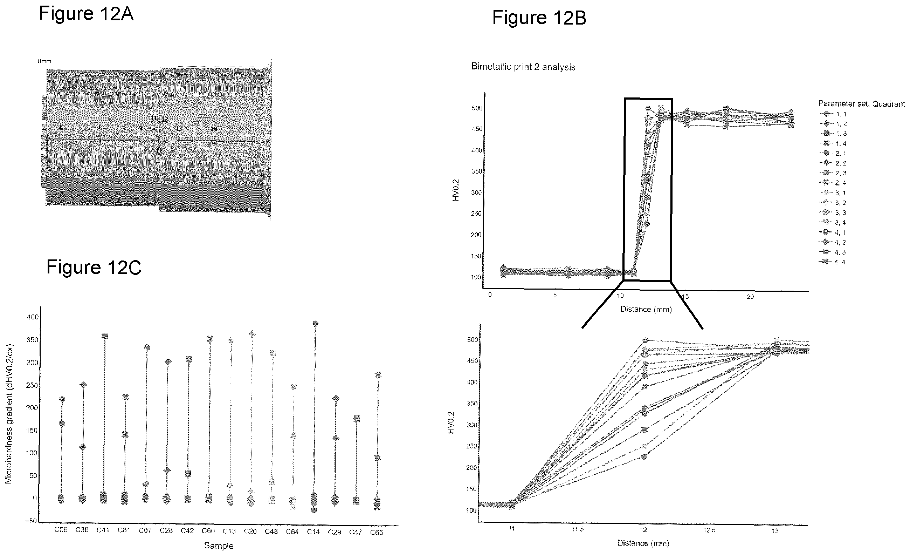

Different print parameters can result in varying joint microhardness in the diffusion region. Microhardness measurement can be carried out along the diffusion region of the cylinder. Figures 12A through 12C illustrate microhardness of printed cylinders in accordance with an embodiment. The cylinders are printed with Inconel^{®} 718 and GRCop-42. The cylinders in the four quadrants are printed using the parameters listed in Table 1. Figure 12A shows a schematic of a cylinder. Microhardness measurements are taken at various locations of the cylinder: at 1 mm, 6 mm, 9 mm, 11 mm, 12 mm, 13 mm, 15 mm, 18 mm, 23 mm, in reference to the 0 mm line. The measurement locations of 11 mm, 12 mm, and 13 mm, are near and within the diffusion region where the two metallic materials are joint together.

Figure 12B shows a plot of microhardness of 16 cylinders (4 cylinders from each quadrant) at the measurement locations. As can be seen, the diffusion region around the bimetallic interface shows a gradient in microhardness. Microhardness transitions from GRCop-42 (from location 11 mm) gradually to the microhardness of Inconel^{®} 718 (at location 13 mm). Microhardness at locations 1 mm, 6 mm, and 9 mm, is consistent among all cylinders, showing a hardness of the bulk GRCop-42. Microhardness at locations 15 mm, 18 mm, and 23 mm, is consistent among all cylinders, showing a hardness of the bulk Inconel^{®} 718. An enlarged view of the transition region shows the variances of the microhardness at the bimetallic interface (location 12 mm). Figure 12C plots the microhardness gradient of each of the 16 columns.

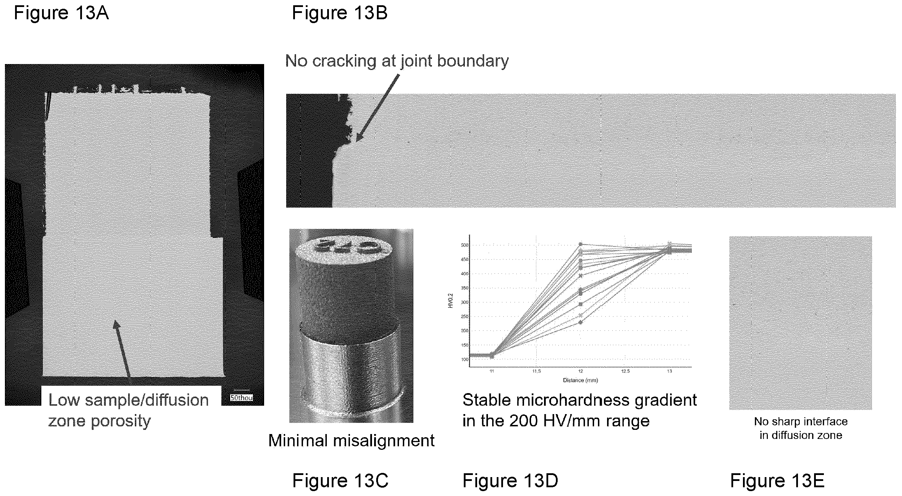

Figures 13A through 13E illustrate joint qualities of a bimetallic part in accordance with an embodiment. Figure 13A illustrates an optical microscope image of a column printed with Inconel^{®} 718 and GRCop-42. The interface between the two materials shows a stochastic mix of the two materials. The diffusion zone exhibits low porosity. Figure 13B illustrates an enlarged view of the interface of the two materials. The joint area of the two metallic material shows good joint properties with no visible cracking at the joint boundary. Figure 13C illustrates an image of the printed bi-metallic part. The two sections are aligned vertically in the center. The image shows minimal misalignment. Figure 13D illustrates measured microhardness in the diffusion zone. The microhardness has a gradient in the diffusion zone and is stable in the 200 HV/mm range. Figure 13E illustrates an enlarged image of the interface of the bimetallic part where no sharp interface can be observed in the diffusion zone.

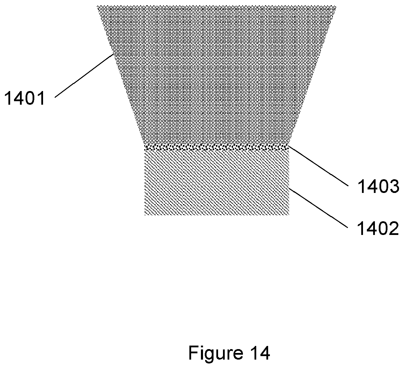

Figure 14 illustrates an additive manufactured engine part for a launch vehicle in accordance with an embodiment. The engine part includes an oxidizer dome and an injector plate. The engine part can be additive manufactured as an integral piece. No additional processes such as welding are needed to form the integral engine part. The print can start on a build plate. The print can start with a first portion 1401 using a first print system. The build plate is aligned with the first print system. The first portion 1401 can be the oxidizer dome or the injector plate. The first portion 1401 is printed with a first metallic material. Once the print of the first portion is complete, the build plate is aligned with a second print system. The second print system prints a second portion 1402 of the engine part with a second metallic material. Printing of the second portion 1402 starts with depositing the second metallic material onto the first portion 1401. The second metallic material is different from the first metallic material. When the first portion 1401 is the oxidizer dome, the second portion 1402 is the injector plate. When the first portion 1401 is the injector plate, the second portion 1402 is the oxidizer dome. The various elements of the first portion 1401 and the second portion 1402 are aligned such that the two different materials are connected to form the integral engine part. A diffusion region 1403 is formed between the first portion 1401 and the second portion 1402. The diffusion region 1403 has a gradient of material compositions, physical properties between the first metallic material and the second material, as the second metallic material is deposited on top of the first metallic material such that the two materials are fused together to form an integral piece. The oxidizer dome can be printed using a Ni-based alloy including (but not limited to) Inconel^{®} 718. The injector plate can be printed with a Cu-Cr-Nb-based alloy including (but not limited to) such as GRCop-42.

### DOCTRINE OF EQUIVALENTS

This description of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications. This description will enable others skilled in the art to best utilize and practice the invention in various embodiments and with various modifications as are suited to a particular use. The scope of the invention is defined by the following claims.

As used herein, the singular terms "a," "an," and "the" may include plural referents unless the context clearly dictates otherwise. Reference to an object in the singular is not intended to mean "one and only one" unless explicitly so stated, but rather "one or more."

As used herein, the terms "approximately" and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0.1 %, or less than or equal to ±0.05%.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. For example, a ratio in the range of about 1 to about 200 should be understood to include the explicitly recited limits of about 1 and about 200, but also to include individual ratios such as about 2, about 3, and about 4, and sub-ranges such as about 10 to about 50, about 20 to about 100, and so forth.

### Example Clauses

Examples are set out in the following clauses:
1. A multi material additive manufacturing system, comprising:
   a first print system configured to print a first section of a part on a build plate using a first powder metallic material; wherein the first print system comprises an energy source configured to melt and fuse the first powder metallic material and form the first section in a layer-by-layer fashion;
   a second print system; and
   an alignment system configured to align the build plate with the second print system; wherein the second print system is configured to print a second section of the part using a second powder metallic material; wherein the second print system comprises an energy source configured to melt and fuse a portion of the first section and the second powder metallic material together at an interface between the first and second sections such that the second section is printed on the first section and the part is printed as an integral piece;
   wherein the first and second powder metallic materials are different.
2. The system of clause 1, wherein the first print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.
3. The system of clause 1 or 2, wherein the second print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.
4. The system of any preceding clause, wherein each of the first and the second powder metallic materials is selected from the group consisting of: a Ni-based alloy, a Ni-based superalloy, an Inconel^{®} alloy, a Haynes^{®} alloy, a Ni-Cr based alloy, a Cu-based alloy, a Cu-Ni-based alloy, a Cu-Cr-Nb alloy, a Cu-Co-Nb-based alloy, a GRCop alloy, a ferrous alloys, an iron-based alloys, an Al-based alloy, a Co-Cr-based alloy, a Ti-based alloy, steel, a precious metal-based alloy, a Au-based alloy, and a Ag-based alloy.
5. The system of any of clauses 1 to 3, wherein each of the first and the second powder metallic materials is selected from the group consisting of: Inconel-625^{®}, Inconel-718^{®}, Haynes-230^{®}, GRCop-42, GRCop-84, C-18150, C-18200, tool steel, stainless steel, 316L, 17-4PH, low carbon steel, medium carbon steel, a 3xxx Al alloy, a 4xxx Al alloy, a 5xxx Al alloy, a 6xxx Al alloy, and a 7xxx Al alloy.
6. The system of any preceding clause, wherein each of the first and the second powder metallic materials has an average diameter from 10 microns to 100 microns.
7. The system of any preceding clause, wherein the alignment system comprises a plurality of alignment pins and an open loop feedback system to align the build plate with the second print system.
8. The system of any preceding clause, wherein the interface of the first and the second sections has a gradient of compositions, microstructures, and mechanical properties.
9. A method for additive manufacturing a multi material part, comprising:
   printing a first section of a part on a build plate using a first powder metallic material with a first print system;
   removing the build plate and the first section from the first print system and aligning the build plate with a second print system; and
   printing a second section of the part with a second powder metallic material such that the second section is printed on the first section and the part is printed as an integral piece;
   wherein the first and second powder metallic materials are different.
10.The method of clause 9, wherein the first print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.
11.The method of clause 9 or 10, wherein the second print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.
12. The method of any of clauses 9 to 11, wherein each of the first and the second powder metallic materials is selected from the group consisting of: a Ni-based alloy, a Ni-based superalloy, an Inconel^{®} alloy, a Haynes^{®} alloy, a Ni-Cr based alloy, a Cu-based alloy, a Cu-Ni-based alloy, a Cu-Cr-Nb alloy, a Cu-Co-Nb-based alloy, a GRCop alloy, a ferrous alloy, an iron-based alloy, an Al-based alloy, a Co-Cr-based alloy, a Ti-based alloy, steel, a precious metal-based alloy, a Au-based alloy, and a Ag-based alloy.
13. The method of any of clauses 9 to 11, wherein each of the first and the second powder metallic materials is selected from the group consisting of: Inconel-625^{®}, Inconel-718^{®}, Haynes-230^{®}, GRCop-42, GRCop-84, C-18150, C-18200, tool steel, stainless steel, 316L, 17-4PH, low carbon steel, medium carbon steel, a 3xxx Al alloy, a 4xxx Al alloy, a 5xxx Al alloy, a 6xxx Al alloy, and a 7xxx Al alloy.
14. The method of any of clauses 9 to 13, wherein each of the first and the second powder metallic materials has an average diameter from 10 microns to 100 microns.
15. The method of any of clauses 9 to 14, wherein the aligning step uses a plurality of alignment pins and an open loop feedback system to align the second print system.
16. The method of any of clauses 9 to 15, further comprising post processing the first section.
17. The method of clause 16, wherein the post processing step is selected from the group consisting of blasting, brushing, rinsing, washing, polishing, machining, dying, heating, annealing, solution annealing, normalizing, stress relieving, aging, tempering, selective heat treating, cold treating, cryogenic treating, carburizing, decarburization, case hardening, precipitation strengthening, hot isostatic pressing, quenching, cooling, and any combinations thereof.
18.The method of any of clauses 9 to 17, further comprising tuning a plurality of print parameters of the first print system to achieve a surface roughness of the first section.
19. The method of clause 18, wherein the plurality of print parameters is selected from the group consisting of: laser power, laser scan speed, laser beam waist, hatch spacing, material layer thickness, and exposure quantity.
20. The method of any of clauses 9 to 19, further comprising post processing the second section.
21. The method of clause 20, wherein the post processing step is selected from the group consisting of blasting, brushing, rinsing, washing, polishing, machining, dying, heating, annealing, solution annealing, normalizing, stress relieving, aging, tempering, selective heat treating, cold treating, cryogenic treating, carburizing, decarburization, case hardening, precipitation strengthening, hot isostatic pressing, quenching, cooling, and any combinations thereof.
22.A multi material part for a rocket engine, comprising:
   an oxidizer dome comprising a first metallic material; and
   an injector plate comprising a second metallic material; wherein the first and the second metallic materials are melted and fused together at an interface between the oxidizer dome and the injector plate such that the oxidizer dome and the injector plate are additive manufactured as an integral piece.

## Claims

1. A multi material additive manufacturing system, comprising:
a first print system configured to print a first section of a part on a build plate using a first powder metallic material; wherein the first print system comprises an energy source configured to melt and fuse the first powder metallic material and form the first section in a layer-by-layer fashion;
a second print system; and
an alignment system configured to align the build plate with the second print system; wherein the second print system is configured to print a second section of the part using a second powder metallic material; wherein the second print system comprises an energy source configured to melt and fuse a portion of the first section and the second powder metallic material together at an interface between the first and second sections such that the second section is printed on the first section and the part is printed as an integral piece;
wherein the first and second powder metallic materials are different.

2. The system of claim 1, wherein the first print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof; wherein the second print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.

3. The system of claim 1 or 2, wherein each of the first and the second powder metallic materials is selected from the group consisting of: a Ni-based alloy, a Ni-based superalloy, an Inconel^{®} alloy, a Haynes^{®} alloy, a Ni-Cr based alloy, a Cu-based alloy, a Cu-Ni-based alloy, a Cu-Cr-Nb alloy, a Cu-Co-Nb-based alloy, a GRCop alloy, a ferrous alloys, an iron-based alloys, an Al-based alloy, a Co-Cr-based alloy, a Ti-based alloy, steel, a precious metal-based alloy, a Au-based alloy, and a Ag-based alloy.

4. The system of claim 1 or 2, wherein each of the first and the second powder metallic materials is selected from the group consisting of: Inconel-625^{®}, Inconel-7180, Haynes-230^{®}, GRCop-42, GRCop-84, C-18150, C-18200, tool steel, stainless steel, 316L, 17-4PH, low carbon steel, medium carbon steel, a 3xxx Al alloy, a 4xxx Al alloy, a 5xxx Al alloy, a 6xxx Al alloy, and a 7xxx Al alloy.

5. The system of any preceding claim, wherein each of the first and the second powder metallic materials has an average diameter from 10 microns to 100 microns.

6. The system of any preceding claim, wherein the alignment system comprises a plurality of alignment pins and an open loop feedback system to align the build plate with the second print system.

7. The system of any preceding claim, wherein the interface of the first and the second sections has a gradient of compositions, microstructures, and mechanical properties.

8. A method for additive manufacturing a multi material part, comprising:
printing a first section of a part on a build plate using a first powder metallic material with a first print system;
removing the build plate and the first section from the first print system and aligning the build plate with a second print system; and
printing a second section of the part with a second powder metallic material such that the second section is printed on the first section and the part is printed as an integral piece;
wherein the first and second powder metallic materials are different.

9. The method of claim 8, wherein the first print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof; wherein the second print system is selected from the group consisting of: powder bed fusion, laser powder bed fusion, laser powder bed, direct metal laser melting, direct metal laser sintering, selective laser sintering, selective heat sintering, laser metal fusion, laser metal deposition, selective laser melting, electron beam melting, direct metal deposition, binder jetting, multi jet fusion, and any combination thereof.

10. The method of claim 8 or 9, wherein each of the first and the second powder metallic materials is selected from the group consisting of: a Ni-based alloy, a Ni-based superalloy, an Inconel^{®} alloy, a Haynes^{®} alloy, a Ni-Cr based alloy, a Cu-based alloy, a Cu-Ni-based alloy, a Cu-Cr-Nb alloy, a Cu-Co-Nb-based alloy, a GRCop alloy, a ferrous alloy, an iron-based alloy, an Al-based alloy, a Co-Cr-based alloy, a Ti-based alloy, steel, a precious metal-based alloy, a Au-based alloy, and a Ag-based alloy; or wherein each of the first and the second powder metallic materials is selected from the group consisting of: Inconel-625^{®}, Inconel-718^{®}, Haynes-230^{®}, GRCop-42, GRCop-84, C-18150, C-18200, tool steel, stainless steel, 316L, 17-4PH, low carbon steel, medium carbon steel, a 3xxx Al alloy, a 4xxx Al alloy, a 5xxx Al alloy, a 6xxx Al alloy, and a 7xxx Al alloy.

11. The method of any of claims 8 to 10, wherein each of the first and the second powder metallic materials has an average diameter from 10 microns to 100 microns.

12. The method of any of claims 8 to 11, wherein the aligning step uses a plurality of alignment pins and an open loop feedback system to align the second print system.

13. The method of any of claims 8 to 12, further comprising at least one of: post processing the first section; tuning a plurality of print parameters of the first print system to achieve a surface roughness of the first section; and post processing the second section.

14. The method of claim 13, wherein the step of post processing the first section is selected from the group consisting of blasting, brushing, rinsing, washing, polishing, machining, dying, heating, annealing, solution annealing, normalizing, stress relieving, aging, tempering, selective heat treating, cold treating, cryogenic treating, carburizing, decarburization, case hardening, precipitation strengthening, hot isostatic pressing, quenching, cooling, and any combinations thereof; wherein the plurality of print parameters is selected from the group consisting of: laser power, laser scan speed, laser beam waist, hatch spacing, material layer thickness, and exposure quantity; wherein the step of post processing the second section is selected from the group consisting of blasting, brushing, rinsing, washing, polishing, machining, dying, heating, annealing, solution annealing, normalizing, stress relieving, aging, tempering, selective heat treating, cold treating, cryogenic treating, carburizing, decarburization, case hardening, precipitation strengthening, hot isostatic pressing, quenching, cooling, and any combinations thereof.

15. A multi material part for a rocket engine, comprising:
an oxidizer dome comprising a first metallic material; and
an injector plate comprising a second metallic material; wherein the first and the second metallic materials are melted and fused together at an interface between the oxidizer dome and the injector plate such that the oxidizer dome and the injector plate are additive manufactured as an integral piece.
